# EUROPEAN PATENT SPECIFICATION

(11) **EP 0 967 404 B1**
(45) Date of publication and mention of the grant of the patent: **23.10.2002**
(21) Application number: 99850095.3
(22) Date of filing: 04.06.1999
(51) Int. Cl.: F16C 35/073, F16C 23/08, F16C 33/78

(54) **Mounting device for a bearing unit**
Vorrichtung zur Montage einer Lagereinheit
Dispositif de montage d'un ensemble palier

(30) Priority: 25.06.1998 SE 9802262
(43) Date of publication of application: 29.12.1999
(73) Proprietor: SKF MEKAN AB, S-641 21 Katrineholm (SE)
(72) Inventor: Östling, Sture, 641 25 Katrineholm (SE); Axelsson, Uno, 641 35 Katrineholm (SE); Hörnfeldt, Krister, 641 34 Katrineholm (SE)
(74) Representative: Westman, P. Börje I.

(56) References cited:
- EP-A- 0 388 378
- EP-A- 0 543 777
- GB-A- 1 452 216
- US-A- 3 623 782
- US-A- 4 235 489
- US-A- 4 697 937
- US-A- 5 373 636

## Description

The present invention is related to a so called insert bearing unit incorporating a sealed single-row deep-groove ball bearing having an outer race ring with a sphered outer envelope surface and a housing with sphered bore for accommodating the bearing. Such bearings can accommodate moderate initial misalignment but does not permit axial movement. Due to the specific application for which the bearing shall be used such bearings have been affixed to a shaft in different manners, such as by means of locking collar with set screw, by means of adapter sleeve and by an appropriate interference fit.

Such a bearing unit is e.g. disclosed in EP-A-543777.

The purpose of the invention is to provide such a bearing having associated therewith a safe, simple and reliable mounting and attachment device for the bearing unit.

EP 0 235 366 B1 and EP 0 388 378 B1 both disclose a bearing housing unit used for a self-aligning double row ball or roller bearing. The unit comprises a tapered clamping sleeve having a longitudinal slit and a flange provided on either side of the bearing. The bore of the inner ring of the bearing and the outer envelope surface of the sleeve are both provided with mating tapering surfaces, in the embodiment shown, saw-tooth-shaped wedging surfaces of small longitudinal extent. Mounting and dismounting of the bearing on the shaft is carried out by axially displacing the bearing and clamping sleeve relative to each other. This axial displacing is obtained in that each side flange of the clamping sleeve is axially fixed on the sleeve and provided with threaded through-bores extending substantially in the longitudinal direction of the sleeve, and each bore housing a set screw, which can be screwed in towards the bearing and thereby transferring the a force directly or indirectly to the bearing inner ring.

The purpose of the present invention is to provide an insert bearing unit of the type referred to above and being equipped with a mounting and attachment device whereby it can be easily and accurately mounted in a safe way, and this is achieved in that the bearing unit is given the features defined in the accompanying claims.

Hereinafter the invention will be further described with reference to embodiments illustrated in the accompanying drawing.
Fig. 1 shows a portion of a shaft with a bearing unit with integrated mounting and attachment device shown in cross-section, and
Fig. 2 is a corresponding view showing a slightly different embodiment of the invention.

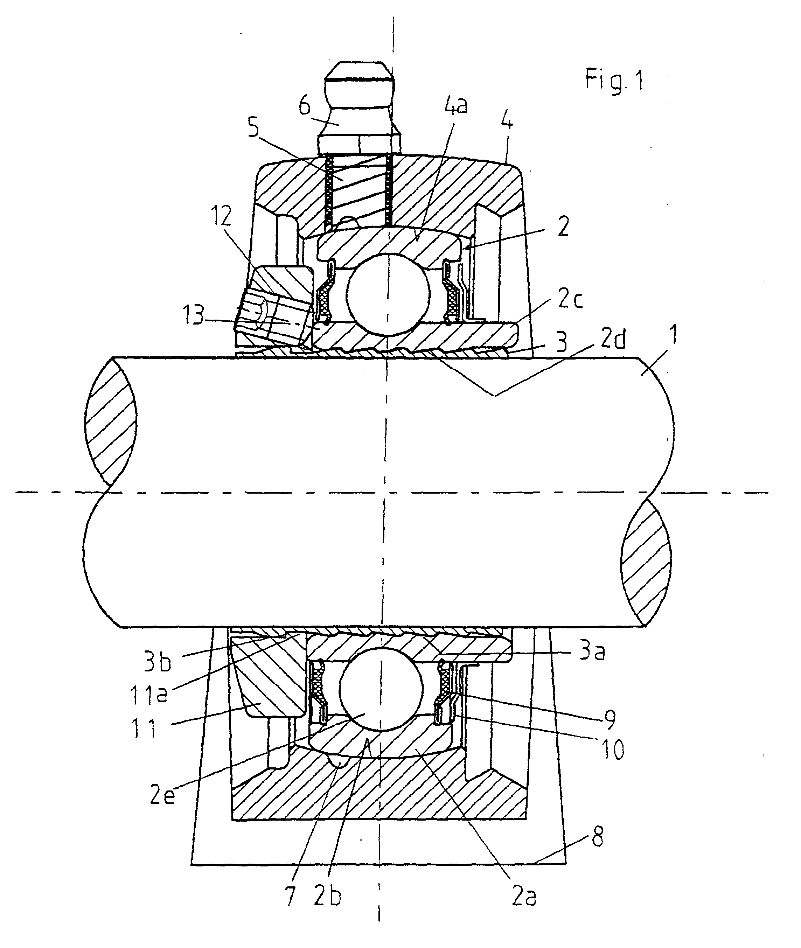

Fig. 1 of the drawings shows a portion of a cylindrical shaft 1, with a single row deep groove ball bearing 2, mounted thereon via a tapering clamping sleeve 3, and positioned in a bearing housing 4. The bearing 2 is of the type known as insert bearing, and it has an outer race ring 2a having a convexly curved outer envelope surface 2b. The housing 4 has an concave inner envelope surface 4a of substantially the same radius of curvature as the outer envelope surface of the outer race ring 2a. A deep-groove ball bearing, which itself can permit neither angular nor axial displacement between the bearing rings, constitutes this insert bearing, and due to the provision of the mating curved surfaces of the outer race ring and the housing the insert bearing unit can permit slight angular misalignment between the housing and the bearing, such as can be caused by long shafts, thermal influence and so on.

The bearing housing 4 has at least one lubrication hole 5 with a lubricant nipple 6 and an annular lubricant groove 7 in the internal envelope surface. The lower side of the housing 4 is designed as a foot portion 8 with which the bearing housing is positioned on a planar surface and attached to this with attachment means, such as bolts (not shown) or the like, whereas the opposite side in the embodiment shown has a convexly curved outer envelope surface.

As mentioned above, the bearing used is a deep groove ball bearing, having an outer ring 2a with a curved outer envelope surface 2b. The bearing also comprises an inner race ring 2c, which has a slightly tapering inner envelope surface 2d, and which has a larger axial length than the outer ring. Both bearing rings have grooves provided in the confronting envelope surfaces and a number of balls 2e are positioned in these grooves. Lip seals 9 are provided at both side axially outside the grooved portions of the bearing rings, and in the example shown a flinger plate 10 is provided outside one of the seals to protect the seal lip. The device may have one, two or no such flinger plate.

The slightly tapering inner envelope surface 2d of the inner ring 2c cooperates with the correspondingly tapering outer envelope surface 3a of the clamping sleeve 3, which has a cylindrical inner envelope surface and which is provided with a longitudinal slot (not shown in the drawing). In the embodiment shown the confronting surfaces 2d and 3a of the inner race ring 2c and the clamping sleeve 3 are both designed with mating saw-tooth longitudinal section profiles for giving the clamping surfaces such a small radial extension as possible, thereby to minimize the overall dimension of the bearing unit.

The clamping sleeve 3 at one side is provided with an radially outwardly projecting annular flange 11, which is secured to the sleeve 3, thus that it can not move axially relative to the sleeve 3 in at least one direction. In the embodiment illustrated this is achieved in that the separate flange has an inner annular projection 11a abutting an external annular shoulder 3b provided on the sleeve 3. The flange 11 may of course also be designed as an integral portion of the sleeve 3, even if the divided form shown in the drawing is preferred for manufacturing reasons and for not negatively influencing the radial compressibility of the sleeve.

The flange 11 is provided with at least one threaded through-hole 12 arranged under an acute angle a to the axial direction of the inner envelope surface of the sleeve 3. Preferably there are more than one such through-hole in the flange, in which case they are arranged at evenly spaced apart positions.

A set screw 13 is positioned in each through-hole 12 and when the said screw(s) is/are screwed into their holes the forward end of each screw will press directly against the side face of the inner race ring 2c, thereby urging the inner race ring 2c to move in mounting direction thereby increasing the clamping effect between itself, the clamping sleeve 3 and the shaft 1. In this manner a safe mounting and retention of the insert bearing unit is obtained in a simple and efficient manner, which can be standardized for most applications of such bearings

Besides that, the angled positioning of the bore-holes for the set screws 13 gives a number of further advantages.

Thus the oblique positioning of the bore-holes 12 gives the advantage that there is better space for the tool used for tightening the set screws. Furthermore the risk for wringing of the clamping sleeve and/or of flange and bearing inner ring is substantially reduced. The driving up force is smaller in comparison to the surface pressure force, which also gives a better possibility to adapt the clamping force. Finally it is also clear that the entire unit consisting of sealed bearing, bearing housing, clamping sleeve and its flange with set screws will be delivered and handled as a self-contained unit, thereby reducing the number of details to handle substantially.

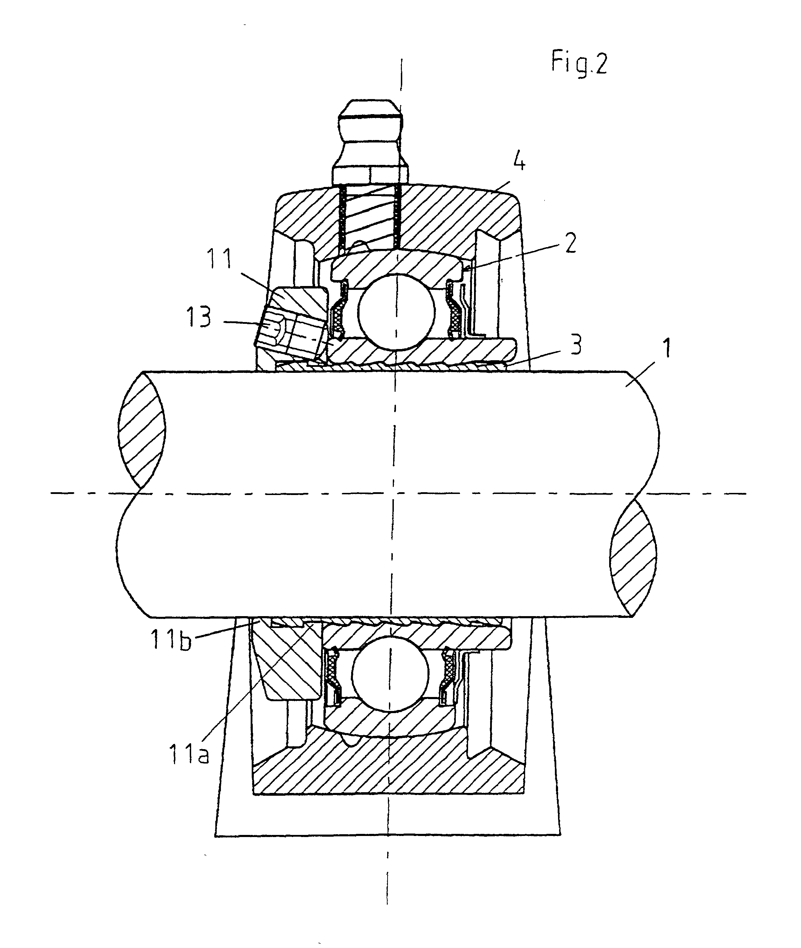

The embodiment according to Fig. 2 differs from that according to Fig. 1 in that the flange 11 in addition to its inner annular projection 11a also has a second internal annular projection 11b arranged axially outside the first annular projection 11a and adapted to embrace the outer end of the sleeve 3. By means of this second projection 11b the dismounting of the joint is simplified, as the sleeve 3 will be carried along in axial direction, when the flange 11 is subjected to an impact axially towards the bearing, when the set screw 13 has been untightened. Thereby it is an easy task to move the sleeve 3 so in relation to the shaft and the inner race ring of the bearing, that the grip between sleeve and bearing ring will cease or at least be substantially reduced.

The invention is not limited to the embodiment shown and described with reference to the drawing, but modifications in details and components within the scope of the appended claims can be contemplated.

## Claims

1. A bearing unit incorporating a sealed single-row deep-groove ball bearing (2) having an outer race ring (2a) with a sphered outer envelope surface (2b) and a housing (4) with sphered bore (4a) for accommodating the bearing, the bearing further having an inner race ring (2c) with a taper bore (2d), and a correspondingly tapered clamping sleeve (3) provided in the bore of the inner race ring (2c) and having a flange (11) provided on at least one side of the bearing (2), whereby the said flange has at least one bore (12), each having a tightening means (13) adapted for causing a force on the bearing inner race ring (2c) for displacing this along the clamping sleeve (3) thereby causing a clamping effect between bearing ring (2c) and sleeve (3) and between sleeve (3) and a shaft (1) on which the bearing unit is mountable,
**characterized** therein,
that the bore (12) is a threaded through-bore extending at an acute angle to the axial direction of the inner envelope surface of the sleeve (3), and the tightening means being a set screw (13), arranged directly to contact a side face of the bearing inner race ring (2c).

2. A bearing unit as claimed in claim 1,
**characterized** therein,
that the confronting surfaces (2d, 3a) of inner race ring (2c) and clamping sleeve (3) are saw-tooth-shaped wedging surfaces of small longitudinal extent.

3. A bearing unit as claimed in claim 1 or 2,
**characterized** therein,
that the bearing is provided with rubbing lip seals (9).

4. A bearing unit as claimed in claim 3,
**characterized** therein,
that each one of the lip seals (9) is protected by a flinger plate (10) positioned outside the seal in the axial direction of the bearing (2).

5. A bearing unit as claimed in anyone of the preceeding claims,
**characterized** therein,
that the flange (11) is provided with means (11a, 11b) for interconnecting the flange (11) and the clamping sleeve to ascertain that the clamping sleeve (3) follows axial movement of the flange (11) along the shaft (1).

## Patentansprüche

1. Lagereinheit, die ein abgedichtetes, einreihiges Rillenkugellager (2) mit einem äußeren Laufring (2a) mit einer sphärischen äußeren Hüllfläche (2b) und ein Gehäuse (4) mit einer sphärischen Bohrung (4a) zur Aufnahme des Lagers umfaßt, wobei das Lager zudem einen inneren Laufring (2c) mit einer Kegelbohrung (2d) und eine entsprechend kegelige Spannhülse (3) aufweist, die in der Bohrung des inneren Laufrings (2c) vorgesehen ist und einen Flansch (11) aufweist, der auf wenigstens einer Seite des Lagers (2) vorgesehen ist und wenigstens eine Bohrung (12) aufweist, die jeweils Anzugsmittel (13) zum Aufbringen einer Kraft auf den inneren Lagerlaufring (2c) zu dessen Verlagerung entlang der Spannhülse (3) aufweist, um dadurch eine Klemmwirkung zwischen dem Lagerring (2c) und der Hülse (3) sowie zwischen der Hülse (3) und der Welle (1) zu bewirken, auf welcher das Lager montierbar ist, **dadurch gekennzeichnet, daß** die Bohrung (12) eine Gewindedurchgangsbohrung ist, die sich in einem spitzen Winkel zur Axialrichtung der inneren Hüllfläche der Hülse (3) erstreckt, und die Anzugsmittel aus einer Stellschraube (13) bestehen, die zum unmittelbaren Berühren einer Seitenfläche des inneren Lagerlaufrings (2c) angeordnet sind.

2. Lagereinheit nach Anspruch 1, **dadurch gekennzeichnet, daß** die sich gegenüberstehenden Flächen (2d, 3a) des inneren Laufrings (2c) und der Spannhülse (3) sägezahnförmige Keilflächen mit kleiner Längserstreckung sind.

3. Lagereinheit nach Anspruch 1 oder 2, **dadurch gekennzeichnet, daß** das Lager mit reibenden Lippendichtungen (9) versehen ist.

4. Lagereinheit nach Anspruch 3, **dadurch gekennzeichnet, daß** jede der Lippendichtungen (9) durch eine in der Axialrichtung des Lagers (2) außerhalb der Dichtung angeordnete Schleuderplatte (10) geschützt ist.

5. Lagereinheit nach einem der vorhergehenden Ansprüche, **dadurch gekennzeichnet, daß** der Flansch (11) mit Mitteln (11a, 11b) zum Verbinden des Flansches (11) und der Spannhülse versehen ist, um sicherzustellen, daß die Spannhülse (3) der Axialbewegung des Flansches (11) entlang der Welle (1) folgt.

## Revendications

1. Ensemble de palier comportant un roulement étanche (2) à une seule rangée de billes et à gorges profondes, ayant une bague extérieure (2a) avec une surface d'enveloppe extérieure sphérique (2b) et un logement (4b) avec un alésage sphérique (4a) pour recevoir le roulement, le roulement ayant en outre une bague intérieure (2c) avec un alésage conique (2d), et un manchon de serrage (3) à conicité correspondante disposé dans l'alésage de la bague intérieure (2c) et ayant une collerette (11) disposée sur au moins un côté du roulement (2), grâce à quoi ladite collerette a au moins un alésage (12), chacun ayant un moyen de serrage (13) conçu pour exercer une force sur la bague intérieure (2c) du roulement afin de déplacer celle-ci le long du manchon de serrage (3) en provoquant ainsi un effet de serrage entre la bague (2c) de roulement et le manchon (3) et entre le manchon (3) et un arbre (1) sur lequel peut être monté l'ensemble de palier,
**caractérisé en ce que**
l'alésage (12) est un trou traversant fileté s'étendant suivant un angle aigu par rapport à la direction axiale de la surface d'enveloppe intérieure du manchon (3), et le moyen de serrage est une vis de serrage (13) placée directement au contact d'une face latérale de la bague intérieure (2c) du roulement.

2. Ensemble de palier selon la revendication 1,
**caractérisé en ce que**
les surfaces mutuellement en regard (2d, 3a) de la bague intérieure (2c) et du manchon de serrage (3) sont des surfaces de calage en dents de scie s'étendant sur une petite longueur.

3. Ensemble de palier selon la revendication 1 ou 2,
**caractérisé en ce que**
le palier est pourvu de joints d'étanchéité (9) à lèvres à frottement.

4. Ensemble de palier selon la revendication 3,
**caractérisé en ce que**
chacun des joints (9) à lèvres est protégé par une plaque déflectrice (10) placée à l'extérieur du joint, dans la direction axiale du roulement (2).

5. Ensemble de palier selon l'une quelconque des revendications précédentes,
**caractérisé en ce que**
la collerette (11) est pourvue d'un moyen (11a, 11b) servant à relier l'un à l'autre la collerette (11) et le manchon de serrage pour assurer que le manchon de serrage (3) suit le mouvement axial de la collerette (11) le long de l'arbre (1).
